# EUROPÄISCHE PATENTSCHRIFT

(11) **EP 0 498 001 B1**
(45) Veröffentlichungstag und Bekanntmachung des Hinweises auf die Patenterteilung: **25.05.1994**
(21) Anmeldenummer: 91101504.8
(22) Anmeldetag: 05.02.1991
(51) Int. Cl.: B60R 22/46

(54) **Rückstrammvorrichtung in einem Sicherheitsgurtsystem für Fahrzeuge**
Pre-tensioning device in a seat-belt system for an automotive vehicle
Dispositif pré-tendeur dans un système de ceinture de sécurité pour véhicule automobile

(43) Veröffentlichungstag der Anmeldung: 12.08.1992
(73) Patentinhaber: TRW REPA GMBH, 73553 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- EP-A- 0 305 765
- DE-A- 3 834 840

## Beschreibung

Die Erfindung betrifft eine Rückstrammvorrichtung in einem Sicherheitsgurtsystem für Fahrzeuge, mit einem mechanischen Rückstrammantrieb, der eine vorgespannte Schraubenfeder aufweist und an der Welle eines, in einem fahrzeugfesten Aufrollergehäuse gelagerten, Gurtaufrollers angreift, und mit einem Auslösemechanismus, der eine Feder in ihrem vorgespannten Zustand hält und fahrzeugsensitiv zur Auslösung eines Rückstrammvorganges freigibt.

Die Wirksamkeit von Rückstrammvorrichtungen zum Schutze der Fahrzeuginsassen bei einer Kollision ist erwiesen. Einer weiten Verbreitung der Rückstrammvorrichtungen in Fahrzeugen, insbesondere Kraftfahrzeugen, steht nur der damit verbundene hohe Aufwand entgegen. Erhebliche Einsparungen gegenüber Rückstrammvorrichtungen mit pyrotechnischem Antrieb werden durch die Verwendung von mechanischen Rückstrammantrieben erzielt, bei denen ein Kraftspeicher in Form einer gespannt gehaltenen Feder verwendet wird, die sich bei einem Rückstrammvorgang plötzlich entspannt. Die Feder wird durch einen Auslösemechanismus in ihrem gespannten Ruhezustand gehalten. Der Auslösemechanismus verfügt über eine fahrzeugsensitive Masse, die beispielsweise ein Pendel bildet, das auf Fahrzeugverzögerungen anspricht und bei Erreichen eines vorbestimmten Auslösekriteriums den Auslösemechanismus ansteuert, so daß dieser die Feder freigibt.

Durch die Erfindung wird eine Rückstrammvorrichtung mit mechanischem Rückstrammantrieb geschaffen, die sich durch Einfachheit, geringen Aufwand, kompakte Bauform und geringes Gewicht auszeichnet, und deren Merkmale in kennzeichnenden Teil des Anspruchs 1 genannt sind.

Bei der erfindungsgemäßen Rückstrammvorrichtung bildet die Feder einen wesentlichen Bestandteil der Sensormasse des Auslösemechanismus. Da die Feder die einzige Kraftquelle für den Rückstrammvorgang darstellt und entsprechend stark dimensioniert werden muß, weist sie eine beträchtliche Masse auf. Diese Masse kann genutzt werden, um Fahrzeugverzögerungen festzustellen und zu messen. Die Feder ist als Schraubenfeder ausgebildet und in einem Führungsrohr aufgenommen, welches relativ zu dem fahrzeugfesten Aufrollergehäuse schwenkbar gelagert und durch Federspannung in eine Ruhestellung vorgespannt ist. Die Auslöseempfindlichkeit kann durch Bemessung dieser Federspannung eingestellt werden. Die Verschwenkung des Führungsrohres relativ zu dem Aufrollergehäuse ist dann ein Maß für die aufgetretene Fahrzeugverzögerung. Die Schwenkbewegung des Führungsrohres mit der darin aufgenommenen, gespannten Feder entgegen der die Auslöseschwelle bestimmenden Federspannung entspricht einer Integration der aufgetretenen Verzögerungswerte über die Zeit. Die Auslösung erfolgt, sobald das Führungsrohr einen Schwenkweg von vorbestimmter Größe relativ zum Aufrollergehäuse ausgeführt hat.

Weitere Merkmale und Vorteile der Erfindung ergeben sich aus der folgenden Beschreibung und aus der Zeichnung, auf die Bezug genommen wird. In der Zeichnung zeigen:
- Fig. 1: eine teilweise im Längsschnitt gezeigte schematische Darstellung einer ersten Ausführungsform eines Gurtaufrollers mit Rückstrammvorrichtung;
- Fig. 2: eine teilweise aufgeschnitten gezeigte schematische Perspektivansicht desselben Gurtaufrollers mit Rückstrammvorrichtung;
- Fig. 3: eine teilweise im Längsschnitt gezeigte schematische Darstellung einer zweiten Ausführungsform eines Gurtaufrollers mit Rückstrammvorrichtung;
- Fig. 4: eine teilweise aufgeschnitten gezeigte schematische Perspektivdarstellung des Gurtaufrollers mit Rückstrammvorrichtung nach Fig. 3; und
- Fig. 5 und 6: schematische Detailansichten zweier Varianten einer Montagesicherung an der Rückstrammvorrichtung.

Bei den hier beschriebenen Ausführungsformen einer Rückstrammvorrichtung wird ein an sich bekannter Gurtaufroller verwendet, der mit der Rückstrammvorrichtung eine Baugruppe bildet. Der Gurtaufroller 10 ist mit einem U-förmigen lasttragenden Aufrollergehäuse 12 versehen, das an einem Fahrzeugaufbauteil mittels einer Schraube befestigt wird. In dem Aufrollergehäuse 12 ist eine Welle 18 drehbar gelagert, auf der das Gurtband 20 aufwickelbar ist. Innerhalb einer Gehäusekappe 22 befindet sich ein Kupplungsmechanismus, der einen seitlichen Antriebsfortsatz der Welle 18 mit einer Seilscheibe 24 in Antriebsverbindung bringt, sobald diese mit einer plötzlichen Drehbeschleunigung angetrieben wird. Auf der Seilscheibe 24 ist das eine Ende eines Zugseils 26 befestigt und aufgerollt; an dem anderen Ende des Zugseils greift ein mechanischer Linearantrieb der Rückstrammvorrichtung an, die nun näher beschrieben wird.

An dem Aufrollergehäuse 12 ist ein Lagerteil 30 starr befestigt. Das Lagerteil 30 weist an seinem dem Gurtaufroller 10 benachbarten Ende zwei parallele, gabelförmig angeordnete Lagerarme 32 auf. Zwischen den Lagerarmen 32 ist auf Lagerzapfen 36 ein Führungsrohr 38 schwenkbar gelagert. In dem Führungsrohr 38 ist eine Schraubenfeder 40 im komprimierten Zustand aufgenommen. Die Schraubenfeder 40 stützt sich mit ihrem dem Gurtaufroller 10 benachbarten Ende am Boden des Führungsrohrs 38 ab; das gegenüberliegende Ende der Schraubenfeder 40 stützt sich an der zum Gurtaufroller 10 hingewandten Seite eines Kolbens 52 ab, der gleitverschiebbar im Führungsrohr 38 aufgenommen ist. Das Zugseil 26 ist in einer Bohrung 44 des Kolbens 52 befestigt.

Die Schraubenfeder 40 wird in dem Führungsrohr 38 mittels eines Rasthebels 54 im gespannten Zustand gehalten. Der Rasthebel 54 ist zweiarmig ausgebildet und am Führungsrohr 38 schwenkbar gelagert. Die Schwenkachse 56 des Rasthebels 54 liegt etwas höher als der Schwerpunkt S aller mit dem Führungsrohr 38 schwenkbeweglichen Teile, wovon die Schraubenfeder 40 die weitaus größte Masse aufweist. Am Ende des einen Armes des Rasthebels 54 ist eine Haltenase 58 gebildet, die durch eine Öffnung 60 des Führungsrohres 38 hindurch in dessen Innenraum hineinragt und an der von der Schraubenfeder 40 abgewandten Fläche des Kolbens 52 angreift. Der andere Arm des Rasthebels 54 ist zu einer Haltefläche 62 hin abgebogen, die an einem quer zur Längsrichtung des Rasthebels 54 verlaufenden Stützbalken 64 gebildet ist, welcher in dem Lagerteil 30 befestigt ist. Die Schwenkachse des Rasthebels 54 liegt radial außerhalb der Auflagefläche der Haltenase 58 auf dem Kolben 52. Folglich tritt an dem Rasthebel 54 ein durch die Spannung der Schraubenfeder 40 verursachtes Moment auf, welches bestrebt ist, den Rasthebel 54 entgegen dem Uhrzeigersinn zu verschwenken. Am Rasthebel 54 tritt also ein sogenanntes Öffnungsmoment auf. Durch dieses Öffnungsmoment wird das umgebogene Ende des zweiten Armes des Rasthebels 54 gegen die Haltefläche 62 des Stützbalkens 64 gedrückt. Diese Haltefläche ist schwach gekrümmt, mit einem Radius, der ihrem Abstand von der Achse der Lagerzapfen 36 entspricht.

An dem Rasthebel 54 ist ein seitlich abstehender Ausleger 66 etwa auf der Höhe der Schwenkachse 56 befestigt. Der Ausleger 66 erstreckt sich durch eine Öffnung 68 einer Querwand 70 des Lagerteils 30 hindurch. Der Ausleger ist mit einer flanschförmigen Verbreiterung 72 versehen, die an der Querwand 70 in Anlage ist. Die Querwand 70 bildet einen Anschlag für die flanschartige Verbreiterung 72 des Auslegers 66, um eine stabile Ruhestellung des Führungsrohres 38 zu definieren. In diese Ruhestellung wird das Führungsrohr durch eine Druckfeder 74 vorbelastet, die in einem am Lagerteil 30 schwenkbar gelagerten Führungsrohr 76 aufgenommen ist und sich mit ihrem einen Ende am Boden des Führungsrohres 76 abstützt. Das andere Ende der Druckfeder 74 stützt sich auf einem im Führungsrohr 76 verschiebbaren Kolben 78 ab. Der Kolben 78 ist auf seiner von der Druckfeder 74 abgewandten Seite mit einem Schlitz versehen, der einen abgerundeten Boden aufweist und in den das teilkreisförmige freie Ende des Auslegers 66 eingreift.

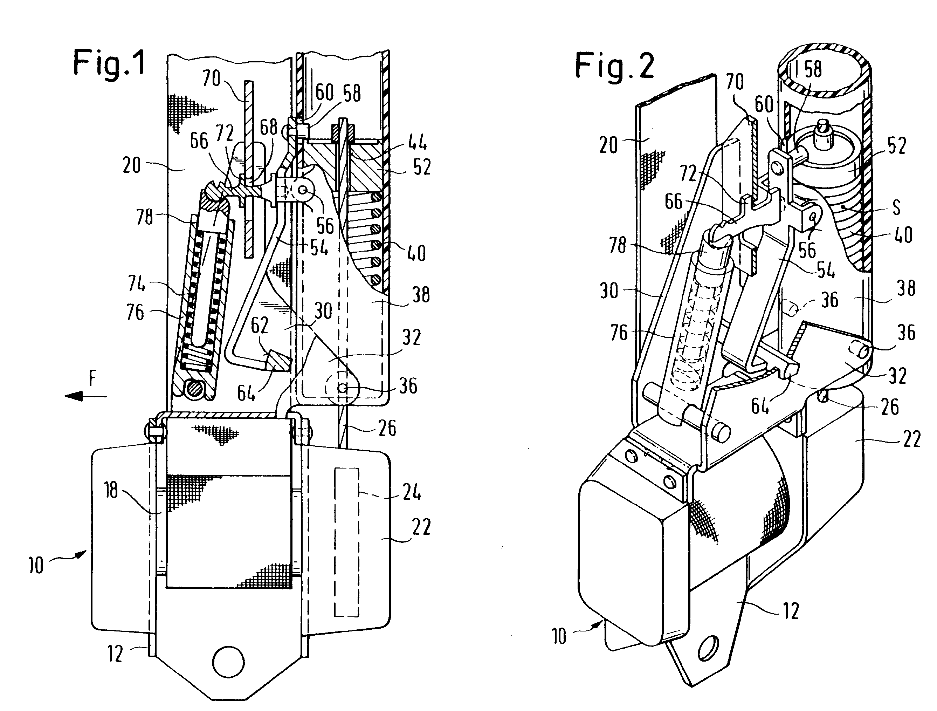

Es wird nun die Arbeitsweise der Rückstrammvorrichtung beschrieben. Der Gurtaufroller 10 wird im Fahrzeug so eingebaut, daß die Achse des Schwenklagers des Führungsrohres 38 quer zur Fahrzeuglängsrichtung verläuft und das Lagerteil 30 zur Vorderseite des Fahrzeugs ausgerichtet ist. Bei einer Fahrzeugverzögerung greifen am Schwerpunkt S Trägheitskräfte an, die bestrebt sind, das Führungsrohr 38 mit der Schraubenfeder 40 entgegen dem Uhrzeigersinn in Fig. 1 und entgegen der Federspannung der Druckfeder 74 zu verschwenken. Die Schwelle, bei welcher eine Verschwenkung des Führungsrohres 38 erfolgt, wird durch Bemessung der Federspannung der Druckfeder 74 bestimmt. Bei der Verschwenkung des Führungsrohres 38 wird der Rasthebel 54 translatorisch auf einem Kreisbogen verlagert, dessen Mittelpunkt die Schwenkachse des Führungsrohres 38 ist. Das umgebogene freie Ende am zweiten Arm des Rasthebels 54 gleitet über die Haltefläche 62 des Stützbalkens 64. Nach einer Schwenkbewegung des Führungsrohres 38 von wenigen Grad gelangt das freie Ende am zweiten Arm des Rasthebels 54 über die Endkante der Haltefläche 62 hinaus. Der Rasthebel 54 kann nunmehr dem über den Kolben 52 auf die Rastnase 58 ausgeübten Druck der Schraubenfeder 40 nachgeben, so daß der Rasthebel 54 plötzlich freigegeben wird und eine Verschwenkung entgegen dem Uhrzeigersinn ausführt. Die Schraubenfeder 40 entspannt sich nunmehr schlagartig und bewegt den Kolben 52 im Führungsrohr 38 nach oben. Zugleich wird auf das Zugseil 26 ein Zug ausgeübt, der am Umfang der Seilscheibe 24 angreift. Die Seilscheibe 24 wird plötzlich in Drehung versetzt. Die in dem Gehäusedeckel 22 angeordnete Kupplung stellt eine Antriebsverbindung zwischen der Seilscheibe 24 und einem Antriebsfortsatz der Welle 18 her. Die Drehbewegung der Seilscheibe 24 wird daher auf die Welle 18 übertragen, so daß Gurtband 20 auf der Welle 18 aufgewickelt wird, um die Gurtlose im Sicherheitsgurtsystem zu beseitigen.

In dem oben beschriebenen Auslösemechanismus wird als fahrzeugsensitive Sensormasse die Schraubenfeder 40 mit dem Führungsrohr 38 verwendet. Von diesen beiden Teilen weist aber die Schraubenfeder 40 die weitaus größere Masse auf, da das Führungsrohr 38 aus einem Werkstoff geringen Gewichts, beispielsweise aus Kunststoff, bestehen kann. Berücksichtigt man, daß ein Auslösemechanismus mit einer fahrzeugsensitiven Sensormasse erhebliche Auslösekräfte aufbringen muß, um imstande zu sein, die unter einer hohen Vorspannung von beispielsweise 2000 N stehende Schraubenfeder 40 bei einem genau und reproduzierbar vordefinierten Fahrzeug-Verzögerungswert auszulösen, so wird ersichtlich, daß der Wegfall einer gesonderten fahrzeugsensitiven Sensormasse eine erhebliche Einsparung an Gewicht und Baugröße mit sich bringt. Die Verwendung einer Schraubenfeder als Kraftspeicher hat den großen Vorteil, daß die aus Gurtaufroller und Rückstrammvorrichtung bestehende Baugruppe in Gestalt und Außenabmessungen herkömmlichen Bauformen von Baugruppen mit pyrotechnischem Rückstrammantrieb nahe kommt. Da das Lagerteil 30 keine hohen Kräfte aufnehmen muß, kann auch dieses aus Kunststoff oder einem anderen leichten und kostengünstigen Werkstoff gefertigt werden.

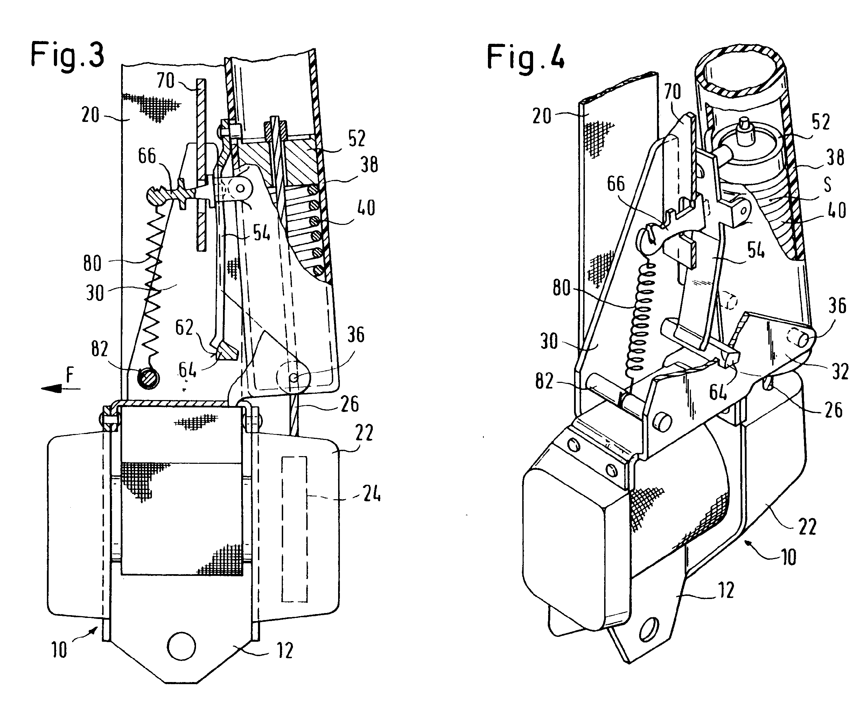

Die Ausführungsform nach den Fig. 3 und 4 unterscheidet sich von der nach den Fig. 1 und 2 hauptsächlich durch die Richtung, in welcher das Führungsrohr 38 relativ zu dem Gurtaufroller 10 verschwenkt wird. Die aus Gurtaufroller und Rückstrammeinrichtung bestehende Baugruppe wird im Fahrzeug so eingebaut, daß das Führungsrohr 38 in Fahrtrichtung vorn gelegen ist. Die Fahrtrichtung ist in den Fig. 1 und 3 jeweils durch einen Pfeil F angedeutet. Durch die veränderte Einbausituation ergeben sich einige Änderungen gegenüber der Ausführungsform nach den Fig. 1 und 2. Das Führungsrohr 38 wird durch eine Zugfeder in eine verschwenkte Ruhestellung vorbelastet, die dadurch definiert ist, daß eine flanschförmige Verbreiterung des Auslegers 66 an der benachbarten Fläche der Querwand 70 zur Anlage kommt. Die Zugfeder 80 ist mit ihrem einen Ende am freien Ende des Auslegers 66 und mit ihrem anderen Ende auf einem Stift 82 eingehängt, der zwischen den Seitenwandungen des Lagerteils 30 befestigt ist. Das freie Ende des zweiten Armes des Rasthebels 54 ist geringfügig abgeschrägt, so daß es parallel auf der Haltefläche 62 des Stützbalkens 64 aufliegt.

Bei der in den Fig. 3 und 4 gezeigten Ausführungsform wird das Führungsrohr 38 unter der Einwirkung von Verzögerungskräften, bei denen eine Aktivierung der Rückstrammeinrichtung erfolgen soll, im Uhrzeigersinn verschwenkt, wobei das freie Ende am zweiten Arm des Rasthebels 54 über die Haltefläche 62 gleitet, bis es über dessen Endkante hinausgelangt ist. Der Rasthebel 54 gibt dann wie bei der zuvor beschriebenen Ausführungsform den Kolben 52 frei, so daß die Schraubenfeder 40 sich schlagartig entspannt. Der Rückstrammvorgang läuft in gleicher Weise wie bei der zuvor beschriebenen Ausführungsform ab.

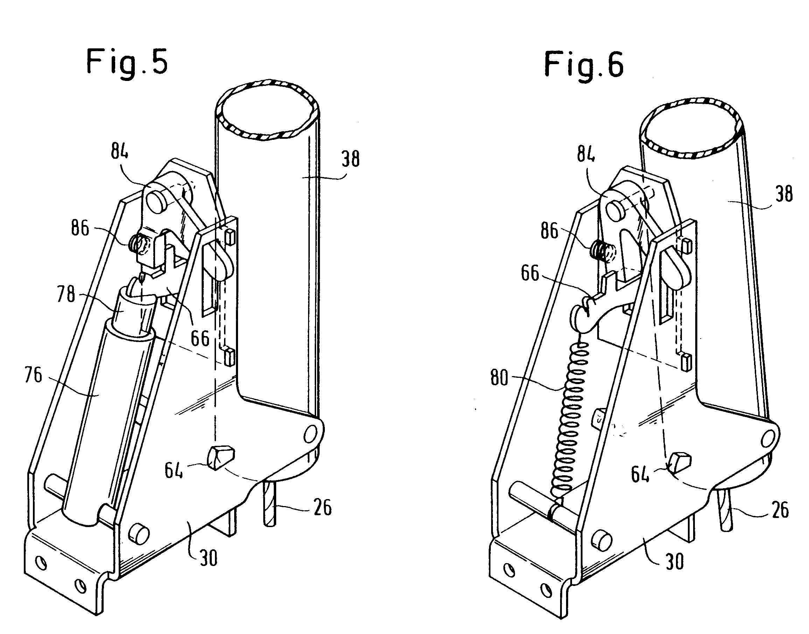

Die Fig. 5 und 6 zeigen jeweils eine Montagesicherung, welche dafür sorgt, daß keine unbeabsichtigte Auslösung der Schraubenfeder 40 erfolgen kann, bis die aus Gurtaufroller und Rückstrammvorrichtung bestehende Baugruppe im Fahrzeug eingebaut ist. Diese Montagesicherung besteht in beiden Fällen aus einem am Lagerteil 30 schwenkbar gelagerten, zweiarmigen Blockierhebel 80, der mit dem Ende seines einen Armes an dem Ausleger 66 angreift, solange diese Baugruppe nicht im Fahrzeug eingebaut ist. In diese Blockierstellung wird der Blockierhebel 80 durch eine Feder 82 vorbelastet. Der andere Arm des Blockierhebels 80 ist als Tasthebel ausgebildet, der mit einer Fläche am Fahrzeugaufbau zusammenwirkt und durch diese im Einbauzustand des Gurtaufrollers niedergedrückt wird, wodurch der andere Arm des Blockierhebels 80 den Ausleger 66 freigibt.

Bei weiteren, in der Zeichnung nicht dargestellten Ausführungsformen sind Aufroller und Rückstrammeinrichtung als getrennte Baugruppen ausgebildet. Bei Bedarf und je nach Einbausituation wird dann das Zugseil über eine Umlenkung geführt, vorzugsweise über eine reibungsarm laufende Umlenkrolle.

## Patentansprüche

1. Rückstrammvorrichtung in einem Sicherheitsgurtsystem für Fahrzeuge, mit einem mechanischen Rückstrammantrieb, der eine vorgespannte Schraubenfeder (40) aufweist und an der Welle (18) eines, in einem fahrzeugfesten Aufrollergehäuse (12) gelagerten, Gurtaufrollers angreift, und mit einem Auslösemechanismus (54), der die Schraubenfeder (40) in ihrem vorgespannten Zustand hält und fahrzeugsensitiv zur Auslösung eines Rückstrammvorganges freigibt**, dadurch gekennzeichnet,** daß die Schraubenfeder (40) in einem Führungsrohr (38) aufgenommen ist, und daß das Führungsrohr (38) relativ zu dem fahrzeugfesten Aufrollergehäuse (12) verschwenkbar gelagert und durch Federspannung (74; 80) am Auslösemechanismus (54) in eine Ruhestellung vorgespannt ist.

2. Rückstrammvorrichtung nach Anspruch 1, **dadurch gekennzeichnet,** daß das Führungsrohr (38) an einem mit dem Aufrollergehäuse (12) fest verbundenen Lagerteil (30) gelagert ist.

3. Rückstrammvorrichtung nach Anspruch 1 oder 2, **dadurch gekennzeichnet**, daß das Lagerteil (30) mit einem Anschlag (70) zur Festlegung der Ruhestellung des Führungsrohres (38) versehen ist.

4. Rückstrammvorrichtung nach Anspruch 2 oder 3, **dadurch gekennzeichnet**, daß das Lagerteil (30) zwei gabelförmig angeordnete Lagerarme (32) aufweist, zwischen denen das Führungsrohr (38) schwenkbar gelagert ist.

5. Rückstrammvorrichtung nach einem der vorstehenden Ansprüche, **dadurch gekennzeichnet,** daß die Schraubenfeder (40) sich mit ihrem einen Ende am Führungsrohr (38) abstützt, daß das andere Ende der Schraubenfeder (40) über einen im Führungsteil (38) verschiebbaren Kolben (52) abgestützt ist und daß der Auslösemechanismus einen an dem Kolben (52) angreifenden Rasthebel (54) aufweist.

6. Rückstrammvorrichtung nach Anspruch 5, **dadurch gekennzeichnet,** daß der Rasthebel (54) an dem Führungsrohr (38) schwenkbar gelagert ist.

7. Rückstrammvorrichtung nach Anspruch 6, **dadurch gekennzeichnet,** daß der Rasthebel (54) zweiarmig ausgebildet ist und am Ende seines ersten Armes eine Haltenase (58) aufweist sowie am Ende seines zweiten Armes abgestützt ist.

8. Rückstrammvorrichtung nach Anspruch 7, **dadurch gekennzeichnet,** daß das freie Ende des zweiten Armes des Rasthebels (54) an einer Haltefläche (62) des Lagerteils (30) abgestützt ist und bei Verschwenkung des Führungsrohres (38) über diese Haltefläche (62) gleitet, bis es über deren Endkante hinaus gelangt und der Rasthebel (54) unter der Wirkung der Vorspannkraft der Schraubenfeder (40) verschwenkt wird, bis die Haltenase (58) den Kolben (42) freigibt.

9. Rückstrammvorrichtung nach Anspruch 8, **dadurch gekennzeichnet,** daß die Haltefläche eine Krümmung aufweist, deren Radius zumindest annähernd gleich ihrem Abstand von der Achse des Schwenklagers (36) des Führungsrohres (38) ist.

10. Rückstrammvorrichtung nach Anspruch 8 oder 9, **dadurch gekennzeichnet,** daß die Achse des Schwenklagers (36) des Führungsrohres (38) an seinem dem Aufrollergehäuse (12) benachbarten Ende gelegen ist.

11. Rückstrammvorrichtung nach Anspruch 8, 9 oder 10, **dadurch gekennzeichnet,** daß die Schwenkachse (56) des Rasthebels (54) so gewählt ist, daß er durch die Vorspannkraft der Schraubenfeder (40) mit einem Öffnungsmoment vorbelastet ist.

12. Rückstrammvorrichtung nach einem der vorstehenden Ansprüche, **dadurch gekennzeichnet,** daß die Schraubenfeder (40) über ein Zugseil (26) am Umfang einer Seilscheibe (24) angreift, die mit der Welle (18) eines Gurtaufrollers kuppelbar ist.

13. Rückstrammvorrichtung nach Anspruch 12 und einem der Ansprüche 5 bis 10, **dadurch gekennzeichnet,** daß das Zugseil (26) an dem Kolben (52) befestigt ist.

14. Rückstrammvorrichtung nach einem der vorstehenden Ansprüche, **dadurch gekennzeichnet,** daß das Führungsrohr (38) mittels einer Montagesicherung (80, 82) in seiner Ruhestellung arretierbar ist.

15. Rückstrammvorrichtung nach einem der Ansprüche 6 bis 14, **dadurch gekennzeichnet,** daß der gemeinsame Schwerpunkt (S) der gespannten Schraubenfeder (40), des Führungsrohres (38) und der mit diesem verbundenen Teile (54) einen etwas geringeren Abstand vom Schwenklager (36) des Führungsrohres (38) aufweist als das Schwenklager (56) des Rasthebels (54).

16. Rückstrammvorrichtung nach einem der Ansprüche 5 bis 15, **dadurch gekennzeichnet,** daß der Rasthebel (54) mit einem seitlich abstehenden Ausleger (66) versehen ist, an dem die das Führungsrohr (38) in seine Ruhestellung vorspannende Feder (74; 80) angreift.

17. Rückstrammvorrichtung nach Anspruch 15 und 16, **dadurch gekennzeichnet**, daß der Ausleger (66) etwa auf der Höhe des Schwenklagers (56) des Rasthebels (54) angeordnet ist.

18. Rückstrammvorrichtung nach Anspruch 16 oder 17, **dadurch gekennzeichnet**, daß die Feder eine Druckfeder (74) ist, die in einem am Lagerteil (30) schwenkbar gelagerten Führungsrohr (76) angeordnet ist.

19. Rückstrammvorrichtung nach Anspruch 16 oder 17, **dadurch gekennzeichnet**, daß die Feder eine Zugfeder (80) ist, die mit ihrem einen Ende am Lagerteil (30) und ihrem anderen Ende an dem Ausleger (66) eingehängt ist.

## Claims

1. Tightening means in a safety belt system for vehicles comprising a mechanical tightening drive which has a pretensioned helical spring (40) and engages the shaft (18) of a belt retractor mounted in a vehicle-fixed retractor housing (12), and a trigger mechanism (54) which holds the helical spring (40) in its pretensioned state and releases that spring in vehicle-sensitive manner for initiating a tightening operation, characterized in that the helical spring (40) is received in a guide tube (38), and that the guide tube (38) is mounted pivotally relatively to the the vehicle-fixed retractor housing (12) and biased by spring tension (74; 80) at the trigger mechanism (54) into a rest position.

2. Tightening means according to claim 1, characterized in that the guide tube (38) is mounted on a bearing member (30) fixedly connected to the belt retractor (12).

3. Tightening means according to claim 1 or 2, characterized in that the bearing member (30) is provided with a stop (70) for defining said rest position of the guide tube (38).

4. Tightening means according to claim 2 or 3, characterized in that the bearing member (30) comprises two bearing arms (32) which are arranged in fork-like manner and between which the guide tube (38) is pivotally mounted.

5. Tightening means according to any one of the preceding claims, characterized in that the helical spring (40) bears with its one end on the guide tube (38), that the other end of the helical spring (40) is supported via a piston (52) displaceable in the guide member (38) and that the trigger mechanism comprises a detent lever (54) engaging the piston (52).

6. Tightening means according to claim 5, characterized in that the detent lever (54) is pivotally mounted on the guide tube (38).

7. Tightening means according to claim 6, characterized in that the detent lever (54) is made two-armed and at the end of its first arm comprises a holding nose (58) and is supported at the end of its second arm.

8. Tightening means according to claim 7, characterized in that the free end of the second arm of the detent lever (54) is supported at a holding surface (62) of the bearing member (30) and on pivoting of the guide tube (38) slides over said holding surface (62) until it moves beyond an end edge thereof, said detent lever (54) is pivoted under the action of the biasing force of said helical spring (40) until the holding nose (58) releases the piston (42).

9. Tightening means according to claim 8, characterized in that the holding surface has a curvature with a radius which is at least approximately equal to its distance from the axis of the pivot bearing (36) of the guide tube (38).

10. Tightening means according to claim 8 or 9, characterized in that the axis of the pivot bearing (36) of the guide tube (38) is located at its end adjacent the retractor housing (12).

11. Tightening means according to claim 8, 9 or 10, characterized in that the pivot axis (56) of the detent lever (54) is so selected that the latter is biased by the biasing force of said helical spring (40) with an opening moment.

12. Tightening means according to any one of the preceding claims, characterized in that the helical spring (40) engages via a pulling cable (26) the periphery of a pulley (24) which is adapted to be coupled to the shaft (18) of the belt retractor.

13. Tightening means according to claim 12 and any one of claims 5 to 10, characterized in that the pulling cable (26) is secured to the piston (52).

14. Tightening means according to any one of the preceding claims, characterized in that the guide tube (38) is arrestable in its rest position by means of a security device (80, 82).

15. Tightening means according to and any one of claims 6 to 14, characterized in that the common centre (S) of gravity of the tensioned helical spring (40), the guide tube (38) and the parts (54) connected to the latter has a somewhat smaller distance from the pivot bearing (36) of the guide tube (38) than the pivot bearing (56) of the detent lever (54).

16. Tightening means according to any one of claims 5 to 15, characterized in that detent lever (54) is provided with a laterally projecting cantilever arm (66) on which the spring (74; 80) biasing the guide tube (38) into its rest position engages.

17. Tightening means according to claims 15 and 16, characterized in that the cantilever arm (66) is arranged substantially at the level of the pivot bearing (56) of the detent lever (54).

18. Tightening means according to claim 16 or 17, characterized in that the spring is a pressure spring (74) which is arranged in a guide tube (76) pivotally mounted on the bearing member (30).

19. Tightening means according to claim 16 or 17, characterized in that the spring is a tension spring (80) which is attached with its one end to the bearing member (30) and with its other end to the cantilever arm (66).

## Revendications

1. Dispositif de rétraction d'un système de ceinture de sécurité pour véhicules, qui comprend une commande mécanique de rétraction comportant un ressort hélicoïdal (40) sous précontrainte et attaquant l'arbre (18) d'un enrouleur de ceinture monté sur un boîtier d'enrouleur (12) fixé sur le véhicule, et qui comprend un mécanisme de déclenchement (54) qui retient le ressort hélicoïdal (40) à son état sous précontrainte et le libère sous l'influence du véhicule pour le déclenchement d'un processus de rétraction, caractérisé en ce que le ressort hélicoïdal (40) est logé dans un tube de guidage (38) et en ce que le tube de guidage (38) est monté pivotant par rapport au boîtier (12) de l'enrouleur, qui est fixé sur le véhicule, et il est retenu sous la précontrainte d'une force de ressort (74, 80) sur le mécanisme de déclenchement (54) à une position de repos.

2. Dispositif de rétraction selon la revendication 1, caractérisé en ce que le tube de montage (38) est monté sur un support (30) fixé au boîtier (12) de l'enrouleur.

3. Dispositif de rétraction selon la revendication 1 ou 2, caractérisé en ce que le support (30) comporte une butée (70) de fixation de la position de repos du tube de guidage (38).

4. Dispositif de rétraction selon la revendication 2 ou 3, caractérisé en ce que le support (30) comprend deux bras de support (32) disposés de manière à former une fourche et entre lesquels le tube de guidage (38) est monté pivotant.

5. Dispositif de rétraction selon l'une des revendications précédentes, caractérisé en ce que le ressort hélicoïdal (40) prend appui par une extrémité contre le tube de guidage (38), en ce que l'autre extrémité du ressort hélicoïdal (40) prend appui contre un piston (52) mobile dans la pièce de guidage (38) et en ce que le mécanisme de déclenchement comprend un levier d'encliquetage (54) qui attaque le piston (52).

6. Dispositif de rétraction selon la revendication 5, caractérisé en ce que le levier d'encliquetage (54) est monté pivotant sur le tube de guidage (38).

7. Dispositif de rétraction selon la revendication 6, caractérisé en ce que le levier d'encliquetage (54) est à deux bras et il comporte un talon de retenue (58) à une extrémité de son premier bras, tandis qu'il prend appui à l'extrémité de son second bras.

8. Dispositif de rétraction selon la revendication 7, caractérisé en ce que l'extrémité libre du second bras du levier d'encliquetage (54) prend appui contre une surface de retenue (62) du support (30) et lorsque le tube de guidage (38) pivote, elle glisse sur cette surface de retenue (62) jusqu'à ce qu'elle parvienne au delà du bord d'extrémité de cette dernière et que l'action de la force de précontrainte du ressort hélicoïdal (40) fasse pivoter le levier d'encliquetage (54) jusqu'à ce que le talon de retenue (58) libère le piston (42).

9. Dispositif de rétraction selon la revendication 8, caractérisé en ce que la surface de retenue comporte une courbe dont le rayon est au moins approximativement égal à sa distance à l'axe du support de pivotement (36) du tube de guidage (38).

10. Dispositif de rétraction selon la revendication 8 ou 9, caractérisé en ce que l'axe du support de pivotement (36) du tube de guidage (38) est placé à son extrémité voisine du boitier (12) de l'enrouleur.

11. Dispositif de rétraction selon la revendication 8, 9 ou 10, caractérisé en ce que l'axe de pivotement (56) du levier d'encliquetage (54) est adopté de manière que la force de précontrainte du ressort hélicoïdal (40) lui impose la charge initiale d'un couple d'ouverture.

12. Dispositif de rétraction selon l'une des revendications précédentes, caractérisé en ce que le ressort hélicoïdal (40) attaque au moyen d'un câble de traction (26) la circonférence d'une poulie (24) à câble qui peut être accouplée à l'arbre (18) de l'enrouleur de la ceinture.

13. Dispositif de rétraction selon la revendication 12 et l'une des revendications 5 à 10, caractérisé en ce que le câble de traction (26) est fixé au piston (52).

14. Dispositif de rétraction selon l'une des revendications précédentes, caractérisé en ce que le tube de guidage (38) peut être arrêté à sa position de repos par un système (80, 82) maintenant l'assemblage.

15. Dispositif de rétraction selon l'une des revendications 6 à 14, caractérisé en ce que le centre de gravité commun (S) du ressort hélicoïdal sous précontrainte (40), du tube de guidage (38) et des pièces (54) reliées à ce dernier est à une distance légèrement plus faible du support de pivotement (36) du tube de guidage (38) que le support de pivotement (56) du levier d'encliquetage (54).

16. Dispositif de rétraction selon l'une des revendications 5 à 15, caractérisé en ce que le levier d'encliquetage (54) comporte un bras (66) qui est saillant latéralement et qu'attaque le ressort (74, 80) qui maintient sous précontrainte le tube de guidage (38) à sa position de repos.

17. Dispositif de rétraction selon les revendications 15 et 16, caractérisé en ce que le bras (66) est disposé à peu près au niveau du support de pivotement (56) du levier d'encliquetage (54).

18. Dispositif de rétraction selon la revendication 16 ou 17, caractérisé en ce que le ressort est un ressort de compression (74) qui est disposé dans un tube de guidage (76) monté pivotant sur le support (30).

19. Dispositif de rétraction selon la revendication 16 ou 17, caractérisé en ce que le ressort est un ressort de traction (80) dont une extrémité est accrochée au support (30) et dont l'autre extrémité est accrochée au bras (66).
